# EUROPEAN PATENT SPECIFICATION

(11) **EP 3 472 540 B1**
(45) Date of publication and mention of the grant of the patent: **27.07.2022**
(21) Application number: 17733318.4
(22) Date of filing: 16.06.2017
(51) Int. Cl.: F25D 29/00, B60P 3/20, G06Q 10/08, G06Q 30/02, G06Q 30/06

(54) **SYSTEM AND METHOD FOR MONITORING THE QUALITY OF PERISHABLE GOODS**
SYSTEM UND VERFAHREN ZUR ÜBERWACHUNG DER QUALITÄT VERDERBLICHER WAREN
SYSTÈME ET PROCÉDÉ DE CONTRÔLE DE LA QUALITÉ DES PRODUITS PÉRISSABLES

(30) Priority: 20.06.2016 US 201662352397 P
(43) Date of publication of application: 24.04.2019
(73) Proprietor: Carrier Corporation, Jupiter, FL 33478 (US)
(72) Inventor: POOLMAN, Ciara, Syracuse, New York 13057 (US); CHOPKO, Robert A., Baldwinsville, New York 13027 (US); BEASLEY, Marc, Beverly, Massachusetts 01915 (US); CRONIN, John, Williston, Vermont 05495 (US); WILSON, Dylan Jonathan, Williston, Vermont 05495 (US)
(74) Representative: Dehns
(86) International application number: PCT/US2017/037912
(87) International publication number: WO 2017/222934

(56) References cited:
- US-A1- 2011 029 413
- US-A1- 2012 323 729
- US-A1- 2013 117 106
- US-A1- 2013 145 324
- US-A1- 2014 358 287
- US-A1- 2015 036 138
- US-A1- 2015 161 909
- US-A1- 2015 260 449

## Description

The embodiments disclosed herein generally relate to cold chain distribution systems, and more specifically to an apparatus and a method for monitoring the quality of perishable goods.

Typically, cold chain distribution systems are used to transport and distribute perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated trucks and trailers are commonly used to transport perishable goods in a cold chain distribution system. A transport refrigeration system is mounted to the truck or to the trailer in operative association with a cargo space defined within the truck or trailer for maintaining a controlled temperature environment within the cargo space.

Conventionally, transport refrigeration systems used in connection with refrigerated trucks and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

Consumers are becoming increasingly concerned with the quality of the perishable goods they are purchasing. Consumers will often spend more on perishable goods if they are assured a high quality product. It is often difficult to predict the quality of perishable goods as the perishable goods may change hands several times along the route. Thus, making it difficult for consumers to gage quality at the time of purchase. Improved systems, particularly improved tracking and quality prediction systems would provide benefits to the industry. Relevant prior art can be found in US 2011/029413 A1.

According to a first aspect, the invention provides the system of claim 1.

The user device may be configured to scan an identification tag of the perishable goods.

The user device may be configured to activate an alarm when the perishable good recommendation is received from the quality management system.

The quality management system may be an artificial neural network.

According to another aspect, the invention provides the method of claim 5.

The method may include scanning, using the user device, an identification tag of the perishable goods.

The method may include activating, using the user device, an alarm when the perishable good recommendation is received from the quality management system.

The quality management system may be an artificial neural network.

Technical effects of embodiments of the present disclosure include tracking various quality parameters of perishable goods and using consumer feedback to providing better quality perishable goods to a consumer tailored to the consumers' specific requirements.

These features and elements as well as the operation thereof will become more apparent in light of the following description and the accompanying drawings. It should be understood, however, that the following description and drawings are intended to be illustrative and explanatory in nature and non-limiting.

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 illustrates a schematic view of a system for monitoring quality of perishable goods;
FIG. 2 illustrates a schematic view a cold chain distribution system;
FIG. 3 illustrates a schematic view a user device;
FIG. 4 illustrates a schematic view a user device; and
FIG. 5 is a flow diagram illustrating a method of monitoring quality of perishable goods.

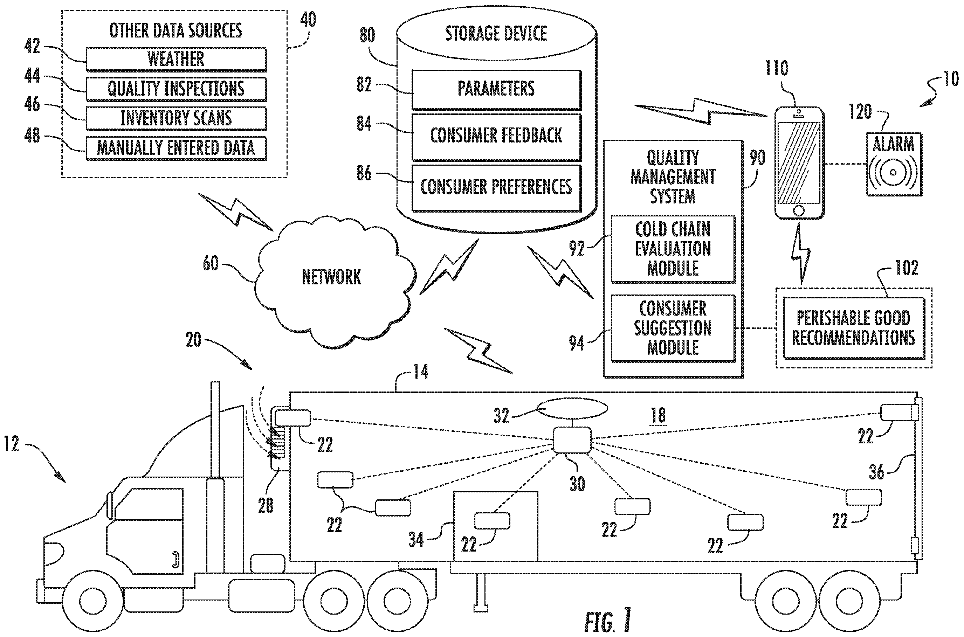

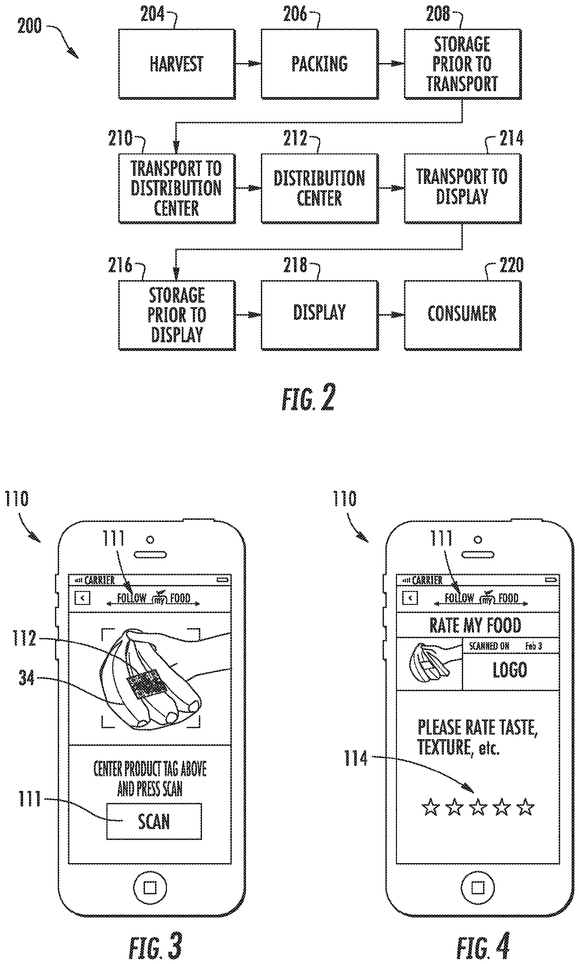

Referring now to the drawings, FIG. 1 illustrates a schematic view of a system 10 for monitoring quality of perishable goods. FIG. 2 illustrates a schematic view a cold chain distribution system 200. Typically, transport refrigeration systems 20 are used to transport and distribute perishable goods and environmentally sensitive goods (herein referred to as perishable goods 34). In the illustrated embodiment, a transport refrigeration system 20 includes an environmentally controlled container 14, a transport refrigeration unit 28 and perishable goods 34. The container 14 may be pulled by a tractor 12. It is understood that embodiments described herein may be applied to shipping containers that are shipped by rail, sea, or any other suitable container, without use of a tractor 12. The container 14 may define an interior compartment 18.

In the illustrated embodiment, the transport refrigeration unit 28 is associated with a container 14 to provide desired environmental parameters, such as, for example temperature, pressure, humidity, carbon dioxide, ethylene, ozone, light exposure, vibration exposure, and other conditions to the interior compartment 18. In further embodiments, the transport refrigeration unit 28 is a refrigeration system capable of providing a desired temperature and humidity range. The perishable goods 34 may include but are not limited to fruits, vegetables, grains, beans, nuts, eggs, dairy, seed, flowers, meat, poultry, fish, ice, blood, pharmaceuticals, or any other suitable cargo requiring cold chain transport.

The transport refrigeration system 20 includes sensors 22. The sensors 22 are utilized to monitor parameters 82 of the perishable goods 34. The parameters 82 monitored by the sensors 22 include at least one of temperature, pressure, humidity, carbon dioxide, ethylene, ozone, light exposure, vibrations, and other conditions in the interior compartment 18. Accordingly, suitable sensors 22 are utilized to monitor the desired parameters 82. Advantageously, sensors 22 may be selected for certain applications depending on the type of perishable goods 34 to be monitored and the corresponding environmental sensitivities. In an embodiment, temperatures are monitored. As seen in FIG. 1, the sensors 22 may be placed directly on the perishable goods 34.

The sensors 22 may be placed in a variety of locations including but not limited to on the transport refrigeration unit 28, on a door 36 of the container 14 and throughout the interior compartment 18. The sensors 22 may be placed directly within the transport refrigeration unit 28 to monitor the performance of the transport refrigeration unit 28. As seen, the sensors 22 may also be placed on the door 36 of the container 14 to monitor the position of the door 36. Whether the door 36 is open or closed affects both the temperature of the container 14 and the perishable goods 34. For instance, in hot weather, an open door 36 will allow cooled air to escape from the container 14, causing the temperature of the interior compartment 18 to rise, thus affecting the temperature of the perishable goods 34. Additionally, a global positioning system (GPS) location may also be detected by the sensors 22. The GPS location may help in providing time-based location information for the perishable goods 34 that will help in tracking the travel route and other parameters 82 along that route. For instance, the GPS location may also help in providing information from other data sources 40 regarding weather 42 experienced by the container 14 along the travel route. The local weather 42 affects the temperature of the container 14 and thus may affect the temperature of the perishable goods 34.

As illustrated in FIG. 1, the transport refrigeration system 20 may further include, a controller 30 configured to log a plurality of readings from the sensors 22, known as the parameters 82, at a selected sampling rate. The controller 30 may be enclosed within the transport refrigeration unit 28 or separate from the transport refrigeration unit 28 as illustrated. The parameters 82 may further be augmented with time, location stamps or other relevant information. The controller 30 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

In an illustrated embodiment, the transport refrigeration system 20 may include a communication module 32 in operative communication with the controller 30 and in wireless operative communication with a network 60. The communication module 32 is configured to transmit the parameters 82 to the network 60 via wireless communication. The wireless communication may be, but is not limited to, radio, microwave, cellular, satellite, or another wireless communication method. The network 60 may be but is not limited to satellite networks, cellular networks, cloud computing network, wide area network, or another type of wireless network. The communication module 32 may include a short range interface. The short range interface may include at least one of: a wired interface, an optical interface, and a short range wireless interface.

Parameters 82 may also be provided by other data sources 40, as illustrated in FIG.1. These other data sources 40 may be collected at any point throughout the cold chain distribution system 200, which as illustrated in FIG. 2 may include harvest 204, packing 206, storage prior to transport 208, transport to distribution center 210, distribution center 212, transport to display 214, storage prior to display 216, display 218 and consumer 220. These stages are provided for illustrative purposes and a distribution chain may include fewer stages or additional stages, such as, for example a cleaning stage, a processing stage, and additional transportation stages. The other data sources 40 may include, but are not limited to, weather 42, quality inspections 44, inventory scans 46, and manually entered data 48. The weather 42, as discussed above, has an effect on the operation of the transport refrigeration unit 28 by influencing the temperature of the container 14 during transport (e.g., 210 and 214) but the weather 42 also has other influences on the transport refrigeration unit 28. For instance, the weather 42 prior to and at harvest 204 may have an impact on the quality of the perishable goods 34. Moreover, quality inspections 44, similar to the weather 42, may reveal data of the perishable goods 34 that affects quality. For instance, a particular batch of strawberries may have the required sugar content desired by the consumer. Quality inspections 44 may be done by a machine or a human being. Quality inspections 44 performed by a machine may be accomplished using a variety of techniques including but not limited to optical, odor, soundwave, infrared, or physical probe.

Further, inventory scans 46 may also reveal parameters 82 about the perishable goods 34 and may help in tracking the perishable goods 34. For instance, the inventory scan 46 may reveal the time, day, truck the perishable goods arrived on, which may help identify the farm if previously unknown. While the system 10 includes sensors 22 to aid in automation, often times the need for manual data entry is unavoidable. The manually entered data 48 may be input via a variety of devices including but not limited to a cellular phone, tablet, laptop, smartwatch, a desktop computer or any other similar data input device known to one of skill in the art.

Parameters 82 collected throughout each stage of the cold chain distribution system 200 may include environment conditions experienced by the perishable goods 34 such as, for example, temperature, pressure, humidity, carbon dioxide, ethylene, ozone, vibrations, light exposure, weather, time and location. For instance, strawberries may have experienced an excessive shock or were kept at 34°F during transport. Parameters 82 may further include attributes of the perishable goods 34 such as, for example, temperature, weight, size, sugar content, maturity, grade, ripeness, labeling, and packaging. For instance, strawberries may be packaged in 1 pound clamshells, be a certain weight or grade, be organic, and have certain packaging or labels on the clamshells. Parameters 82 may also include information regarding the operation of the environmental control unit 28, as discussed above. The parameters 82 may further be augmented with time, location stamps or other relevant information.

The system 10 further includes a storage device 80 to store the parameters 82 associated with the perishable goods 34 of a distribution chain. At least one of the parameters 82 may be received from a transport refrigeration system. The storage device 80 is connected to the communication module 32 through the network 60. The storage device 80 also stores consumer feedback 84 and consumer preferences 86, as seen in FIG. 1. The storage device 80 may be but is not limited to a random access memory (RAM), read only memory (ROM), or other electronic, optical, magnetic or any other computer readable medium.

The system 10 further includes a quality management system 90. The quality management system 90 is connected to the communication module 32 through the network 60. Also, the quality management system 90 is coupled to the storage device. As shown, the quality management system 90 includes a cold chain evaluation module 92 and a consumer suggestion module 94. In an embodiment, the quality management system 90 is an artificial neural network. The quality management system 90 may also include a processor (not shown) and an associated memory (not shown). The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium. The cold chain evaluation module 92 and the consumer suggestion module 94 may be implemented in software as applications executed by the processor of the quality management system 90.

The cold chain evaluation module 92 determines quality elements in response to the consumer feedback 84 and the parameters 82. Quality elements are parameters 82 at a particular time during the cold chain distribution 200 that may have led to the certain consumer feedback 84. For instance, temperature could have spiked slightly at one point during transportation to the distribution center 210, which down the line allowed excessive levels of bacteria growth in the perishable good, resulting in negative consumer feedback 84. Advantageously, by analyzing possible parameters that may have let to negative feedback, cold chain distribution companies can quickly identify a problem and correct the parameters that may have led to the problem. In another example, positive consumer feedback 84 from a consumer may have been linked to excellent weather prior to harvest 204 and/or perfect environmental conditions during transportation to the distribution center 210. Advantageously, positive consumer feedback could help cold chain distribution system companies known what parameters must be replicated to produce the ideal perishable good 34 for the specific consumer, so that the quality management system 90 is continuously learning and improving. Consumer feedback 84 may also be collected from social media, such as, for example Facebook, Twitter, Instagram, LinkedIn, Myspace, Google+, and similar networks. The social media data may be processed using text mining and other machine learning techniques to detect trending patterns for particular perishable goods 34 in particular locations. For instance, "#BadStrawberries" may be trending on social media in New England, which may help identify the source of the strawberries and solve the problem.

The consumer suggestion module 94 determines perishable good recommendations 102 in response to the parameters 82, the consumer feedback 84, and the consumer preferences 86. Consumer feedback 84 may include information regarding: the geolocation of the consumer at the time of purchasing the perishable goods 34, the time when the perishable goods 34 were purchased, the type of perishable goods 34 (ex: bananas), the brand of perishable goods 34, and the quality of the perishable goods 34. Some of the consumer feedback 84 may be collected passively (i.e. passive transmission) by an application 111 of a user device 110 such as, for example, tracking the time and location of the consumer at the time the perishable goods 34 were purchased. The user device 110 may be a device such as, for example, a cellular phone, tablet, laptop, smartwatch, desktop computer or any similar device. Further, some consumer feedback 84 may be collected automatically (i.e. automatic transmission) when the consumer scans 111 an identification (ID) tag 112 of the perishable goods 34 with the application 111 on their user device 110. The scan 111 may reveal consumer feedback 84 such as, for example the type of perishable goods 34 and the brand of perishable goods 34. The ID tag 112 may be a Universal Product Code (UPC) bar code, Quick Response (QR) code, or another identification methodology known to one of skill in the art. FIG. 3 shows a user device 110 being used to scan 111 the ID tag 112 of a perishable good 34. For instance, a camera of a smart phone may be used to scan the QR code on some bananas, as seen in FIG. 3. Once the perishable good 34 is identified with the application 111 on the user device 110, some consumer feedback 84 may have to be actively entered (i.e. active transmission) into a user device 110 such as, for example the quality of the perishable goods 34. The consumer feedback 84 may be entered via one or more rankings, such as, for example a number ranking system, an emoticon ranking system, or a star ranking system 114 on the application 111 of the user device 110, as seen in FIG. 4. For instance, the consumer may be asked to rate certain aspects of the perishable good 34, such as for example taste, texture, sweetness, or another descriptive quality known to one of skill in the art.

As mentioned above, the perishable good recommendations 102 are determined by the consumer suggestion module 94 in response to the parameters 82, the consumer feedback 84, and the consumer preferences 86. The perishable good recommendations 102 include various recommendations of perishable goods 34 that may satisfy previous consumer feedback 84 and consumer preferences 86 entered into the application 111. First instance, a consumer may have rated one shipment of strawberries extremely favorable, thus the consumer suggestion module 94 may look for current shipments of strawberries with similar parameters 82 to the previous shipment and recommend them to the consumer through a perishable good recommendation 102. The perishable good recommendations 102 may be accessible via the user device 110 and/or sent directly to the user device 110. The perishable good recommendation 102 may show up as an audible and/or visual alarm 120 on the user device 110. The perishable good recommendation 102 include the time, date, and store location of a shipment of perishable goods 34 that meet the consumer preferences 86. Consumer preferences 86 may include price. Consumer preferences 86 include quality aspects, such as for example taste, texture, moisture levels, sugar content, kosher, organic, non-gmo, free-range, grass-fed, or any other food preferences known to one of skill in the art.

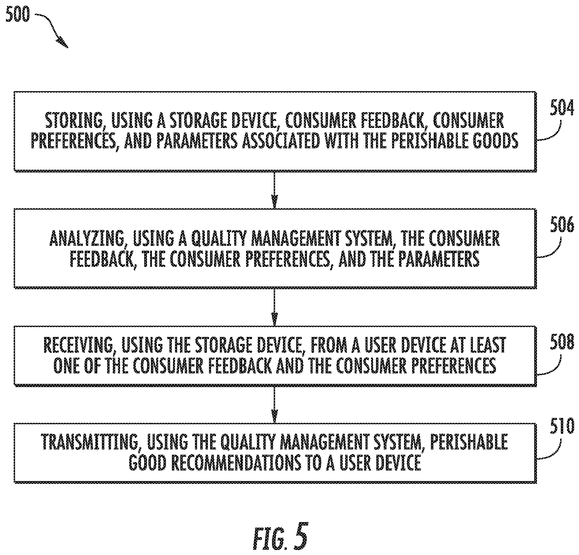

Referring now also to FIG. 5, which shows a flow diagram illustrating a method 500 of monitoring quality of perishable goods 34, according to an embodiment of the present disclosure. At block 504, the storage device 80 stores consumer feedback 84, consumer preferences 86, and parameters 82 associated with the perishable goods 34. At block 506, the quality management system 90 analyzes the consumer feedback 84, the consumer preferences 86, and the parameters 82. As described above the quality management system 90 is coupled to the storage device 80. The quality management system 90 includes: the cold chain evaluation module 92 to determine quality elements in response to the consumer feedback 84 and the parameters 82; and the consumer suggestion module 94 to determine perishable good recommendations 102 in response to the parameters 82, the consumer feedback 84, and the consumer preferences 86.

At block 508, the storage device 80 receives from the user device 110 at least one of the consumer feedback 84 and the consumer preferences 86. At block 510, the quality management system 90 transmits perishable good recommendations 102 to the user device 110. The method may also include scanning 111, using the user device 110, the identification tag 112 of the perishable goods 34. The method 500 further includes transmitting, using the user device 110, consumer feedback 84 and consumer preferences 86 to the storage device 80. The method 500 may yet further include activating, using the user device 110, an alarm 120 when a perishable good recommendation 102 is received from the quality management system 90. The method 500 still further includes monitoring, using at least one sensor 22, the parameters 82 of the perishable goods 34 and transmit the parameters to the storage device 80.

While the above description has described the flow process of FIG. 5 in a particular order, it should be appreciated that unless otherwise specifically required in the attached claims that the ordering of the steps may be varied.

While the disclosure has been described in detail in connection with only a limited number of embodiments, it should be readily understood that the invention is not limited to such disclosed embodiments. Rather, the disclosure can be modified to incorporate any number of variations, alterations, substitutions or equivalent arrangements not heretofore described, but which are commensurate with the scope of the invention, as defined by the claims. Accordingly, the invention is not to be seen as limited by the foregoing description, but is only limited by the scope of the appended claims.

## Claims

1. A system (10) for monitoring the quality of perishable goods (34) in a cold chain distribution system (200), the system (10) comprising:
a storage device (80) configured to store consumer feedback (84), consumer preferences (86), and parameters (82) associated with the perishable goods (34);
at least one sensor (22) configured to monitor the parameters (82) of the perishable goods (34) and to transmit the parameters to the storage device (80), wherein the parameters include at least one of temperature, pressure, humidity, carbon dioxide, ethylene, ozone, light exposure, and vibrations;
a user device (110)
**characterized in that**
the user device (110) is configured to transmit to the storage device (80) the consumer feedback (84) and the consumer preferences (86);
a quality management system (90) coupled to the storage device (80), the quality management system (90) including:
a cold chain evaluation module (92) configured to determine quality elements in response to the consumer feedback (84) and the parameters (82), wherein each quality element includes a parameter (82) at a particular time during the cold chain distribution system that is determined as leading to a certain consumer feedback; and
a consumer suggestion module (94) configured to determine perishable good recommendations (102) in response to the parameters (82), the consumer feedback (84), and the consumer preferences (86),
wherein the quality management system (90) is configured to transmit the perishable good recommendations (102) to the user device (110), and wherein the perishable good recommendations (102) include:
recommended perishable goods (34) that satisfy the consumer feedback (84) and the consumer preferences (86), and
a time/date and a store location of a shipment of the recommended perishable goods (34).

2. The system of claim 1, wherein:
the user device (110) is configured to scan an identification tag of the perishable goods (34).

3. The system of claim 1, wherein:
the user device (110) is configured to activate an alarm when the perishable good recommendation is received from the quality management system (90).

4. The system of claim 1, wherein:
the quality management system (90) is an artificial neural network.

5. A method of monitoring the quality of perishable goods (34) in a cold chain distribution system (200), the method comprising:
monitoring, using at least one sensor (22), parameters (82) of the perishable goods (34) and transmitting the parameters to a storage device (80), wherein the parameters include at least one of temperature, pressure, humidity, carbon dioxide, ethylene, ozone, light exposure, and vibrations;
**characterized by**
transmitting, using a user device (110), consumer feedback (84) and consumer preferences (86) to the storage device (80);
storing, using the storage device (80), the consumer feedback (84), the consumer preferences (86), and the parameters (82) associated with the perishable goods (34);
analyzing, using a quality management system (90), the consumer feedback (84), the consumer preferences (86), and the parameters (82), the quality management system (90) coupled to the storage device (80), the quality management system (90) including:
a cold chain evaluation module to determine quality elements in response to the consumer feedback (84) and the parameters (82), wherein each quality element includes a parameter (82) at a particular time during the cold chain distribution system that is determined as leading to a certain consumer feedback (84); and
a consumer suggestion module (94) to determine perishable good recommendations (102) in response to the parameters, the consumer feedback (84) and the consumer preferences (86); and
transmitting the perishable good recommendations (102) to the user device (110);
wherein the perishable good recommendations (102) include:
recommended perishable goods (34) that satisfy the consumer feedback (84) and the consumer preferences (86), and
a time/date and a store location of a shipment of the recommended perishable goods (34).

6. The method of claim 5, further comprising:
scanning, using the user device (110), an identification tag of the perishable goods (34).

7. The method of claim 5, further comprising:
activating, using the user device (110), an alarm when the perishable good recommendation is received from the quality management system (90).

8. The method of claim 5, wherein:
the quality management system (90) is an artificial neural network.

## Patentansprüche

1. System (10) zum Überwachen der Qualität verderblicher Güter (34) in einem Kühlkettenverteilersystem (200), wobei das System (10) umfasst:
eine Speichervorrichtung (80), die ausgelegt ist, Konsumentenrückmeldung (84), Konsumentenpräferenzen (86) und Parameter (82), die mit den verderblichen Gütern (34) verknüpft sind, zu speichern;
mindestens einen Sensor (22), der ausgelegt ist, die Parameter (82) der verderblichen Güter (34) zu überwachen und die Parameter an die Speichervorrichtung (80) zu übertragen, wobei die Parameter mindestens eines von Temperatur, Druck, Feuchtigkeit, Kohlenstoffdioxid, Ethylen, Ozon, Lichteinwirkung und Schwingungen beinhalten;
eine Benutzervorrichtung (110)
**dadurch gekennzeichnet, dass**
die Benutzervorrichtung (110) ausgelegt ist, die Konsumentenrückmeldung (84) und die Konsumentenpräferenzen (86) an die Speichervorrichtung (80) zu übertragen;
ein Qualitätsmanagementsystem (90), das an die Speichervorrichtung (80) gekoppelt ist, wobei das Qualitätsmanagementsystem (90) beinhaltet:
ein Kühlkettenauswertungsmodul (92), das ausgelegt ist, Qualitätselemente in Antwort auf die Konsumentenrückmeldung (84) und die Parameter (82) zu ermitteln, wobei jedes Qualitätselement einen Parameter (82) zu einem bestimmten Zeitpunkt während des Kühlkettenverteilersystems beinhaltet, der ermittelt wird, zu einer bestimmten Konsumentenrückmeldung zu führen; und
ein Konsumentenberatungsmodul (94), das ausgelegt ist, Empfehlungen verderblicher Güter (102) in Antwort auf die Parameter (82), die Konsumentenrückmeldung (84) und die Konsumentenpräferenzen (86) zu ermitteln,
wobei das Qualitätsmanagementsystem (90) ausgelegt ist, die Empfehlungen verderblicher Güter (102) an die Benutzervorrichtung (110) zu übertragen, und wobei die Empfehlungen verderblicher Güter (102) beinhalten:
empfohlene verderbliche Güter (34), die die Konsumentenrückmeldung (84) und die Konsumentenpräferenzen (86) erfüllen, und
einen Zeitpunkt/ein Datum und einen Lagerungsort einer Lieferung der empfohlenen verderblichen Güter (34).

2. System nach Anspruch 1, wobei:
die Benutzervorrichtung (110) ausgelegt ist, ein Kennungsschild der verderblichen Güter (34) abzutasten.

3. System nach Anspruch 1, wobei:
die Benutzervorrichtung (110) ausgelegt ist, einen Alarm zu aktivieren, wenn die Empfehlung verderblicher Güter von dem Qualitätsmanagementsystem (90) empfangen wird.

4. System nach Anspruch 1, wobei:
das Qualitätsmanagementsystem (90) ein künstliches neuronales Netzwerk ist.

5. Verfahren zum Überwachen der Qualität verderblicher Güter (34) in einem Kühlkettenverteilersystem (200), wobei das Verfahren umfasst:
Überwachen, unter Verwendung mindestens eines Sensors (22), von Parametern (82) der verderblichen Güter (34) und Übertragen der Parameter an eine Speichervorrichtung (80), wobei die Parameter mindestens eines von Temperatur, Druck, Feuchtigkeit, Kohlenstoffdioxid, Ethylen, Ozon, Lichteinwirkung und Schwingungen beinhalten;
**gekennzeichnet durch**
Übertragen, unter Verwendung einer Benutzervorrichtung (110), einer Konsumentenrückmeldung (84) und Konsumentenpräferenzen (86) an die Speichervorrichtung (80);
Speichern, unter Verwendung der Speichervorrichtung (80), der Konsumentenrückmeldung (84), der Konsumentenpräferenzen (86) und der Parameter (82), die mit den verderblichen Gütern (34) verknüpft sind;
Analysieren, unter Verwendung eines Qualitätsmanagementsystems (90), der Konsumentenrückmeldung (84), der Konsumentenpräferenzen (86) und der Parameter (82), wobei das Qualitätsmanagementsystem (90) an die Speichervorrichtung (80) gekoppelt ist, wobei das Qualitätsmanagementsystem (90) beinhaltet:
ein Kühlkettenauswertungsmodul zum Ermitteln von Qualitätselementen in Antwort auf die Konsumentenrückmeldung (84) und die Parameter (82), wobei jedes Qualitätselement einen Parameter (82) zu einem bestimmten Zeitpunkt während des Kühlkettenverteilersystems beinhaltet, der ermittelt wird, zu einer bestimmten Konsumentenrückmeldung (84) zu führen; und
ein Konsumentenberatungsmodul (94), um Empfehlungen verderblicher Güter (102) in Antwort auf die Parameter, die Konsumentenrückmeldung (84) und die Konsumentenpräferenzen (86) zu ermitteln; und
Übertragen der Empfehlungen verderblicher Güter (102) an die Benutzervorrichtung (110);
wobei die Empfehlungen verderblicher Güter (102) beinhalten:
empfohlene verderbliche Güter (34), die die Konsumentenrückmeldung (84) und die Konsumentenpräferenzen (86) erfüllen, und
einen Zeitpunkt/ein Datum und einen Lagerungsort einer Lieferung der empfohlenen verderblichen Güter (34).

6. Verfahren nach Anspruch 5, weiter umfassend:
Abtasten, unter Verwendung der Benutzervorrichtung (110), eines Kennungsschilds der verderblichen Güter (34).

7. Verfahren nach Anspruch 5, weiter umfassend:
Aktivieren, unter Verwendung der Benutzervorrichtung (110), eines Alarms, wenn die Empfehlung verderblicher Güter von dem Qualitätsmanagementsystem (90) empfangen wird.

8. Verfahren nach Anspruch 5, wobei:
das Qualitätsmanagementsystem (90) ein künstliches neuronales Netzwerk ist.

## Revendications

1. Système (10) de surveillance de la qualité de denrées périssables (34) dans un système de distribution à chaîne du froid (200), le système (10) comprenant :
un dispositif de stockage (80) configuré pour stocker un retour de consommateur (84), des préférences de consommateur (86), et des paramètres (82) associés aux denrées périssables (34) ;
au moins un capteur (22) configuré pour surveiller les paramètres (82) des denrées périssables (34) et pour transmettre les paramètres au dispositif de stockage (80), dans lequel les paramètres incluent au moins un d'une température, d'une pression, d'une humidité, de dioxyde de carbone, d'éthylène, d'ozone, d'une exposition lumineuse, et de vibrations ;
un dispositif utilisateur (110)
**caractérisé en ce que**
le dispositif utilisateur (110) est configuré pour transmettre au dispositif de stockage (80) le retour de consommateur (84) et les préférences de consommateur (86) ;
un système de gestion de qualité (90) couplé au dispositif de stockage (80), le système de gestion de qualité (90) incluant :
un module d'évaluation de chaîne du froid (92) configuré pour déterminer des éléments de qualité en réponse au retour de consommateur (84) et aux paramètres (82), dans lequel chaque élément de qualité inclut un paramètre (82) à un moment particulier durant le système de distribution à chaîne du froid qui est déterminé comme menant à un certain retour de consommateur ; et
un module de suggestion au consommateur (94) configuré pour déterminer des recommandations de denrées périssables (102) en réponse aux paramètres (82), au retour de consommateur (84), et aux préférences de consommateur (86),
dans lequel le système de gestion de qualité (90) est configuré pour transmettre les recommandations de denrées périssables (102) au dispositif utilisateur (110), et dans lequel les recommandations de denrées périssables (102) incluent :
des denrées périssables (34) recommandées qui satisfont au retour de consommateur (84) et aux préférences de consommateur (86), et
une heure/date et un emplacement d'entrepôt d'une expédition des denrées périssables (34) recommandées.

2. Système selon la revendication 1, dans lequel :
le dispositif utilisateur (110) est configuré pour scanner une étiquette d'identification des denrées périssables (34).

3. Système selon la revendication 1, dans lequel :
le dispositif utilisateur (110) est configuré pour déclencher une alarme lorsque la recommandation de denrées périssables a été reçue à partir du système de gestion de qualité (90).

4. Système selon la revendication 1, dans lequel :
le système de gestion de qualité (90) est un réseau de neurones artificiels.

5. Procédé de surveillance de la qualité de denrées périssables (34) dans un système de distribution à chaîne du froid (200), le procédé comprenant :
une surveillance, à l'aide d'au moins un capteur (22), de paramètres (82) des denrées périssables (34) et une transmission des paramètres à un dispositif de stockage (80), dans lequel les paramètres incluent au moins un d'une température, d'une pression, d'une humidité, de dioxyde de carbone, d'éthylène, d'ozone, d'une exposition lumineuse, et de vibrations ;
**caractérisé par**
une transmission, à l'aide d'un dispositif utilisateur (110), d'un retour de consommateur (84) et de préférences de consommateur (86) au dispositif de stockage (80) ;
un stockage, à l'aide du dispositif de stockage (80), du retour de consommateur (84), des préférences de consommateur (86), et des paramètres (82) associés aux denrées périssables (34) ;
une analyse, à l'aide d'un système de gestion de qualité (90), du retour de consommateur (84), des préférences de consommateur (86), et des paramètres (82), le système de gestion de qualité (90) étant couplé au dispositif de stockage (80), le système de gestion de qualité (90) incluant :
un module d'évaluation de chaîne du froid pour déterminer des éléments de qualité en réponse au retour de consommateur (84) et aux paramètres (82), dans lequel chaque élément de qualité inclut un paramètre (82) à un moment particulier durant le système de distribution à chaîne du froid qui est déterminé comme menant à un certain retour de consommateur (84) ; et
un module de suggestion au consommateur (94) pour déterminer des recommandations de denrées périssables (102) en réponse aux paramètres, au retour de consommateur (84) et aux préférences de consommateur (86) ; et
une transmission des recommandations de denrées périssables (102) au dispositif utilisateur (110) ;
dans lequel les recommandations de denrées périssables (102) incluent :
des denrées périssables (34) recommandées qui satisfont au retour de consommateur (84) et aux préférences de consommateur (86), et
une heure/date et un emplacement d'entrepôt d'une expédition des denrées périssables (34) recommandées.

6. Procédé selon la revendication 5, comprenant en outre :
le fait de scanner, à l'aide du dispositif utilisateur (110), une étiquette d'identification des denrées périssables (34).

7. Procédé selon la revendication 5, comprenant en outre :
un déclenchement, à l'aide du dispositif utilisateur (110), d'une alarme lorsque la recommandation de denrées périssables a été reçue à partir du système de gestion de qualité (90).

8. Procédé selon la revendication 5, dans lequel :
le système de gestion de qualité (90) est un réseau de neurones artificiels.
